# EUROPEAN PATENT APPLICATION

(11) **EP 1 507 350 A1**
(43) Date of publication of application: **16.02.2005**
(21) Application number: 03728076.5
(22) Date of filing: 16.05.2003
(51) Int. Cl.: H04J 13/04

(54) **PATH SEARCH DEVICE AND METHOD, AND ARRAY ANTENNA RECEPTION DEVICE USING THE SAME**

(30) Priority: 22.05.2002 JP 2002147077
(71) Applicant: NEC Corporation, Minato-ku, Tokyo 108-8001 (JP)
(72) Inventor: NAKAGAWA, Takashi, NEC CORPORATION, Minato-ku, Tokyo 108-8001 (JP)
(74) Representative: von Samson-Himmelstjerna, Friedrich R., Dipl.-Phys.
(86) International application number: PCT/JP2003/006111
(87) International publication number: WO 2003/098855

(57) **Abstract**

There are provided a path search apparatus and method and array antenna unit using them which receive signals of a DS-CDMA scheme from an array antenna unit including a plurality of antenna elements and detect multipath timings. In a signal receiving system having a plurality of array antenna units (141, 142), a delay profile is combined for each of antenna elements (11 - 16), and path detection is performed using the combined output, thereby allowing higher-precision and higher-speed path detection. In addition to a delay profile for each antenna element, delay profiles may be combined across array antenna units (diversity branches). When beams are to be formed in a searcher section (44), delay profiles are combined for respective beams facing in a single direction across the array antenna units.

## Description

### Technological Field

The present invention relates to a path search apparatus and method and an array antenna receiving apparatus using them and, more particularly, to a path search system which receives signals of a DS-CDMA (Direct Spread-Code Division Multiple Access) scheme from an array antenna unit comprising a plurality of antenna elements and detects multipath timings.

### Background Art

A receiving apparatus of a mobile communication system using a DS-CDMA scheme now use a diversity antenna. In a diversity antenna unit, to decrease correlation between antenna elements, antennas are arranged such that antenna elements 1 and 2 have a large interval D1, as shown in Fig. 1 (e.g., an interval of several λ; λ is a signal wavelength). Since the correlation is small, one antenna element can often receive signals at a high level even when the reception level of the other antenna element decreases due to fading. The probability of degradation in reception quality can be reduced more than a case wherein fading waves are received using one antenna. A reception scheme using a diversity antenna unit, however, is directly influenced by interference waves if present.

As a technique for reducing degradation in quality due to interference waves, there is available a reception technique using an array antenna unit. In this array antenna unit, antennas are arranged such that a plurality of antenna elements 3 to 5 have a small interval D2 (an interval of about λ /2), as shown in Fig. 2. By multiplying a signal received by each antenna element by amplitude and phase weights, the directivity pattern (beam) of each antenna can equivalently be formed. If an area is divided by a plurality of beams thus formed, the influence of interference waves in a direction different from that of a desired wave can be suppressed.

Since the array antenna unit has the small element interval D2, as shown in Fig. 2, correlation between the antenna elements becomes extremely large. For this reason, a decrease in reception level due to fading influences all antenna elements constituting the array antenna unit, and degradation in reception quality cannot be compensated. If an interval between antenna elements is increased, no ideal beam can be formed, and the primary object, i.e., suppression of interference waves cannot be attained.

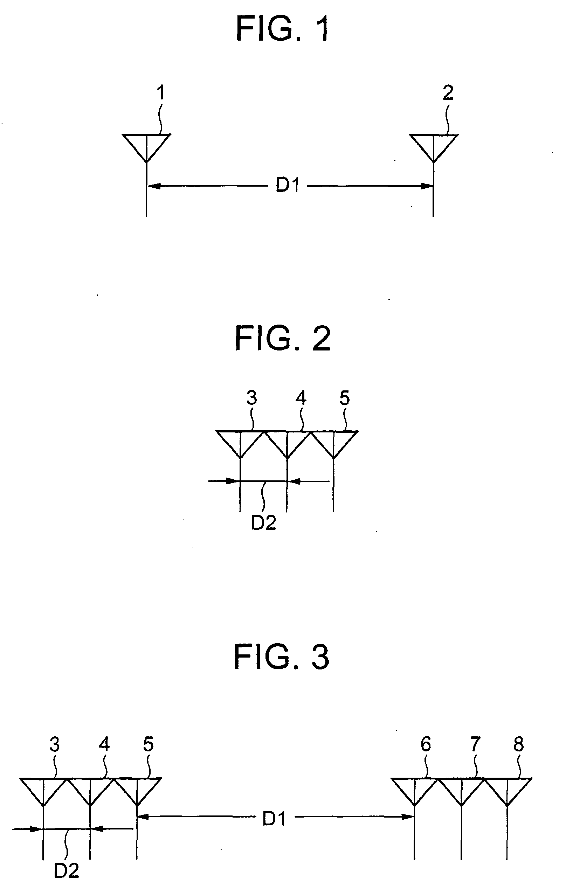

As a scheme which covers up disadvantages and exploits advantages of a diversity antenna unit and array antenna unit, a technique that pertains to an antenna unit is disclosed in, e.g., WO 00/03456. The antenna unit has a plurality of array antenna units each comprising a plurality of antenna elements 3 to 5 or 6 to 8, as shown in Fig. 3, and the plurality of array antenna units are separated from each other such that correlation between them can be neglected.

However, in the description of a receiving apparatus of a DS-CDMA communication scheme which has a plurality of array antenna units each comprising the plurality of antenna elements 3 to 5 or 6 to 8, as shown in Fig. 3, there is neither reference to nor implication of a path search scheme which detects multipath timings. Thus, high-precision and high-speed path search is demanded for a receiving apparatus having an antenna unit arrangement as shown in Fig. 3.

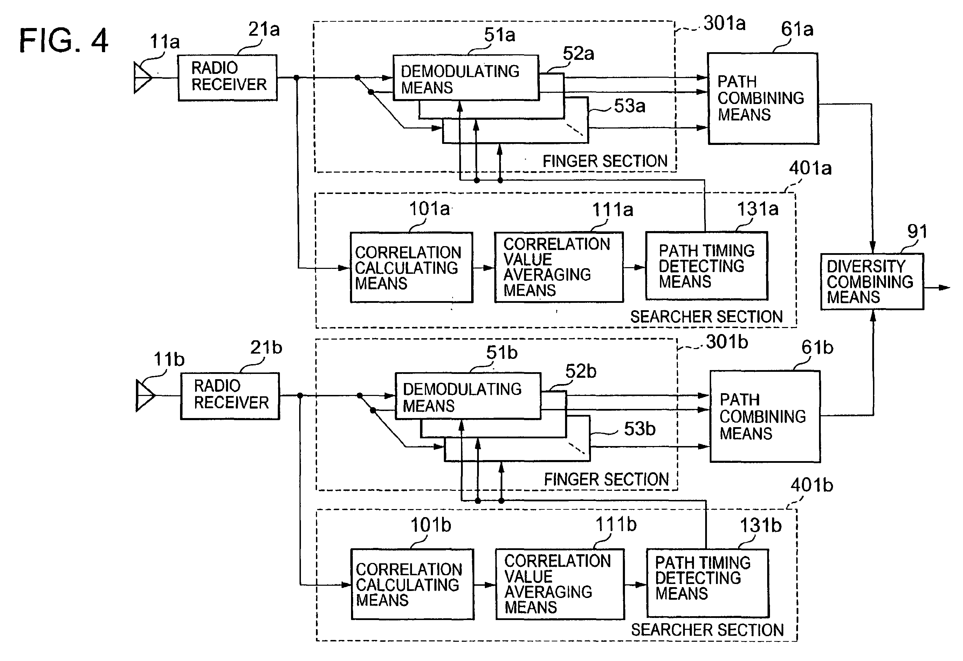

An example of the arrangement of a receiving apparatus in a mobile communication system of a CDMA scheme using a conventional diversity antenna unit will be described with reference to Fig. 4.

In searcher sections 401a and 401b of a conventional diversity antenna receiving apparatus in Fig. 4, detection of a synchronization chip timing (path detection) between a spreading code and a spread signal as a received signal is performed independently for each antenna. Path combining means 61a and 61b and an antenna combining (diversity combining) means 91 perform RAKE combination reception using the path timing information.

The prior art will be described in detail with reference to Fig. 4. In Fig. 4, antennas 11a and 11b are equivalent to the diversity antennas 1 and 2 shown in Fig. 1. Signals received by the antennas 11a and 11b are frequency-converted into intermediate-frequency (IF band) signals in radio receivers 21a and 21b and are amplified. After the amplified signals are detected to I/Q channel baseband signals using quadrature detection, they are converted into digital signals by A/D converters. The outputs from the radio receivers 21a and 21b are sent out to finger sections 301a and 301b and searcher sections 401a and 401b.

In the searcher sections 401a and 401b, correlation calculating means 101a and 101b calculate the code correlation values of desired wave signals contained in received signals at a plurality of chip timings. Correlation value averaging means 111a and 111b average correlation values output at a single chip timing from the correlation calculation means 101a and 101b for a predetermined period of time and output peak correlation values and delay profiles having undergone noise-level smoothing. The delay profiles generated by the correlation value averaging means 111a and 111b are input to path timing detecting means 131a and 131b. The path timing detecting means 131a and 131b detect peaks from the combined delay profiles and notify the finger sections 301a and 301b of synchronization chip timings corresponding to the detected peaks.

Each of the finger sections 301a and 301b has fingers corresponding in number to paths to be demodulated and has demodulating means 51a to 53a and 51b to 53b corresponding in number to the fingers. Each finger is allocated to one path (synchronization chip timing). The demodulators 51a to 53a and 51b to 53b demodulate signals at the synchronization chip timings and output the demodulated signals to the path combining means 61a and 61b. The path combining means 61a and 61b combine the demodulation results for the respective paths into antenna outputs, which are supplied to and combined by a diversity combining means 91. After that, the combination result is sent to a decoder (not shown).

The example of a receiving apparatus in a mobile communication system of a CDMA scheme using a conventional diversity antenna has been described. High-precision and high-speed path search is demanded for this receiving apparatus.

The present invention has been made in consideration of the above-mentioned circumstances, and has as its object to provide a path search apparatus and method which can perform high-precision and high-speed path search, and an array antenna receiving apparatus using them.

### Disclosure of Invention

To achieve the above-mentioned object, according to the present invention, there is provided a path search apparatus which receives a signal of a CDMA scheme by an array antenna unit including a plurality of antenna elements and detects a multipath timing, characterized by comprising a plurality of array antenna units, delay profile combining means for combining delay profiles for respective antenna elements in the plurality of array antenna units, and path timing detecting means for detecting path timings of respective outputs from the delay profile combining means.

According to the present invention, the delay profile combining means is provided for each of the plurality of array antenna units and is arranged to combine the delay profiles for the antenna elements in the array antenna unit.

According to the present invention, the delay profile combining means is arranged to collectively combine the delay profiles for the respective antenna elements in the plurality of array antenna units.

According to the present invention, there is provided a path search apparatus further comprising beam forming means for forming a beam using as an input a signal received by each antenna element in each of the plurality of array antenna units, wherein the delay profile combining means is arranged to combine delay profiles for respective beams facing in a single direction across the plurality of array antenna units. The beam forming means in the path search apparatus has multiplying means for multiplying an output from each antenna element by a predetermined multiplication value.

To achieve the above-mentioned object, according to the present invention, there is provided a path search method of receiving a signal of a CDMA scheme by a plurality of array antenna units each including a plurality of antenna elements and detecting a multipath timing, characterized by including the delay profile combining step of combining delay profiles for respective antenna elements in the plurality of array antenna units, and the path timing detecting step of detecting path timings of respective outputs in the delay profile combining step.

According to the present invention, in the delay profile combining step, a delay profile for each antenna element is combined for each of the plurality of array antenna units.

According to the present invention, in the delay profile combining step, the delay profiles for the respective antenna elements in the plurality of array antenna units are collectively combined.

According to the present invention, there is provided a path search method characterized by further comprising the beam forming step of forming a beam using as an input a signal received by each antenna element in each of the plurality of array antenna units, wherein in the delay profile combining step, delay profiles are combined for respective beams facing in a single direction across the plurality of array antenna units. The beam forming step in the path search method comprises a multiplying step of multiplying an output from each antenna element by a predetermined multiplication value.

To achieve the above-mentioned object, according to the present invention, there is provided an array antenna receiving apparatus characterized by comprising any one of the above-mentioned path search apparatuses, and demodulating means, provided for each of the plurality of array antenna units, for demodulating a signal received by each antenna element in the array antenna unit on the basis of a path timing detected by the path search apparatus.

According to the present invention, there is provided an array antenna receiving apparatus characterized by further comprising weighting means, provided for each of the plurality of antenna units, for weighting demodulation outputs from the respective antenna elements by adaptive control, and combining means for RAKE-combining outputs from the weighting means.

The operation of the present invention will be described. In a signal receiving system having a plurality of array antenna units, delay profiles are combined for respective antenna elements, and path detection is performed using the combined output, thereby allowing higher-precision and higher-speed path detection than a conventional path search scheme. In a signal receiving system having a plurality of array antenna units, delay profiles are combined not only for respective antenna elements but also across array antenna units (diversity branches). Path detection is performed using the combined output, thereby allowing high-precision and high-speed path detection. In a signal receiving system having a plurality of array antenna units, when beams are to be formed by a searcher section, delay profiles are combined for respective beams facing in a single direction across array antenna units (diversity branches), and path detection is performed using the combined output, thereby allowing high-precision and high-speed path detection.

As described above, according to the present invention, path search can be performed at high precision and high speed.

### Brief Description of Drawings

Fig. 1 is a view showing an antenna layout example using a diversity antenna unit;
Fig. 2 is a view showing an antenna layout example using an array antenna unit;
Fig. 3 is a view showing an antenna layout example using a combination of a diversity antenna unit and an array antenna unit;
Fig. 4 is a block diagram showing an example of a receiving apparatus of a CDMA scheme which uses conventional diversity antenna units;
Fig. 5 is a block diagram of the first embodiment of a receiving apparatus according to the present invention;
Fig. 6 is a block diagram of the second embodiment of a receiving apparatus according to the present invention; and
Fig. 7 is a block diagram of the third embodiment of a receiving apparatus according to the present invention;

### Best Mode for Carrying Out the Invention

Preferred embodiments will be described with reference to the accompanying drawings to explain the present invention in detail.

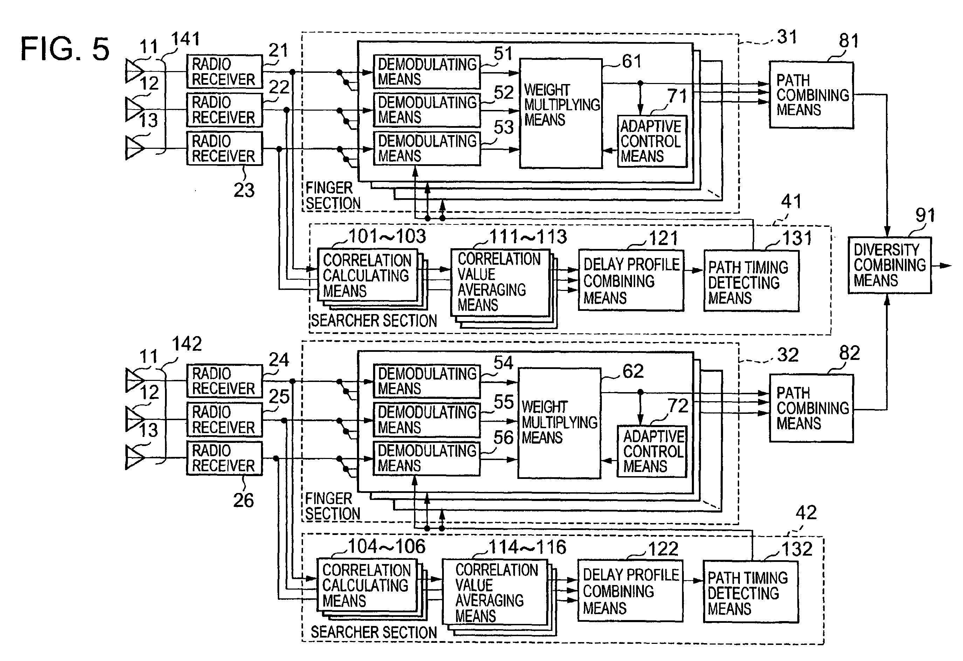

The first embodiment of the present invention will be described with reference to Fig. 5.

Fig. 5 shows, as an example, a receiving apparatus which has two array antenna units each consisting of three antenna elements. In the present invention, however, the number of antenna elements or array antennas is not limited to that shown in Fig. 5. The present invention is also effective for an arbitrary number of antenna elements or array antennas. The interval between antenna elements is about half the wavelength of carrier waves, and an interval D1 between array antenna units is set to a distance (several λ ) which allows to sufficiently reduce the correlation.

The first embodiment has an array antenna unit 141 comprising antenna elements 11 to 13, and an array antenna unit 142 comprising antenna elements 14 to 16, as shown in Fig. 5. The first embodiment includes radio receivers 21 to 26 which convert RF signals from the antenna elements into digital baseband signals, searcher sections 41 and 42 which detect the path positions (synchronization chip timings) of the respective array antenna units (diversity branches), finger sections 31 and 32 which demodulate signals at the timings detected by the searcher sections, calculate weights using a known adaptive algorithm such as MMSE (Minimum-Mean-Squared-Error), and multiply the signals by the weights to form beams, path combining means 81 and 82 which combine the demodulation results from the fingers, and a diversity combining means 91 which combines the demodulation results from the branches.

The searcher section 41 includes correlation calculating means 101 to 103 corresponding in number to the antenna elements, correlation value averaging means 111 to 113 for averaging correlation results of the antenna elements and generate delay profiles, a delay profile combining means 121 for adding and combining the delay profiles, and a path timing detecting means 131 for detecting a synchronization chip timing from the combined delay profile. The other searcher section 42 includes the same components.

The finger section 31 has a plurality of fingers, each of which includes demodulating means 51 to 53 corresponding in number to the antenna elements, a weight multiplying means 61, and an adaptive control means 71. The other finger section 32 includes the same components.

The operation of the first embodiment will be described next. Receivers connected to the array antenna unit 141 and those connected to the array antenna unit 142 have the same arrangement. Thus, the receivers connected to the array antenna unit 141 will be exemplified below.

RF signals received by the antenna elements 11 to 13 are sent to the radio receivers 21 to 23, respectively. After the RF signals are frequency-converted into intermdiate-frequency (IF band) signals in the radio receivers 21 to 23, they are amplified by automatic gain amplifiers. The amplified signals are detected to I/Q channel baseband signals using quadrature detection and are converted into digital signals by A/D converters. The outputs from the radio receiver 21 to 23 are sent to the finger section 31 and searcher section 41.

In the searcher section 41, the correlation calculating means 101 to 103 calculate the code correlation values of desired wave signals contained in received signals at a plurality of chip timings for the respective antenna elements. The correlation value averaging means 111 to 113 average correlation values output at a single chip timing from the correlation calculating means 101 to 103 for a predetermined period of time and output peak correlation values and delay profiles having undergone noise-level smoothing.

The delay profiles for the respective antenna elements generated by the correlation value averaging means 111 to 113 are combined at a single chip timing by the delay profile combining means 121 into a combined delay profile. The path timing detecting means 131 detects a plurality of peaks from the combined delay profile and notifies the finger section 31 of synchronization chip timings corresponding to the detected peaks.

The finger section 31 has fingers corresponding in number to paths to be demodulated. One of them has the demodulating means 51 to 53 corresponding in number to the antenna elements. Each finger is allocated to one path (synchronization chip timing). The demodulating means 51 to 53 demodulate signals at the synchronization chip timings and output the demodulated signals to the weight multiplying means 61. The weight multiplying means 61 multiplies the demodulation results by weights calculated by the adaptive control means 71 and supplies the multiplication results to the path combining means 81.

The path combining means 81 combines the demodulation results for the respective paths into one output from the array antenna unit 141 and outputs it to the diversity combining means 91.

The diversity combining means 91 combines an output result from the array antenna unit 141 and an output result similarly obtained from the array antenna unit 142 and sends the combination result to a decoder (not shown).

According to the first embodiment, the level of noise contained in a delay profile is averaged and reduced, and peaks become prominent. Synchronization chip timings can be detected at high precision. The implementation of peak detection precision of the same level as that of a conventional scheme makes it possible to shorten the averaging time in each of the correlation value averaging means 111 to 116. In other words, synchronization chip timings can be detected at high speed, and the capability of following up any variation in synchronization chip timing of a multipath wave generated upon movement of a terminal can be improved.

Generally, the peak level of a correlation value varies independently under the conditions for antenna diversity in which the intervals between antenna units are much longer than the wavelength of carrier waves. The synchronization chip timings are considered to be substantially equal to each other. Under the circumstances, the second embodiment of the present invention will propose a receiver which also combines delay profiles across two array antenna units constituting branches.

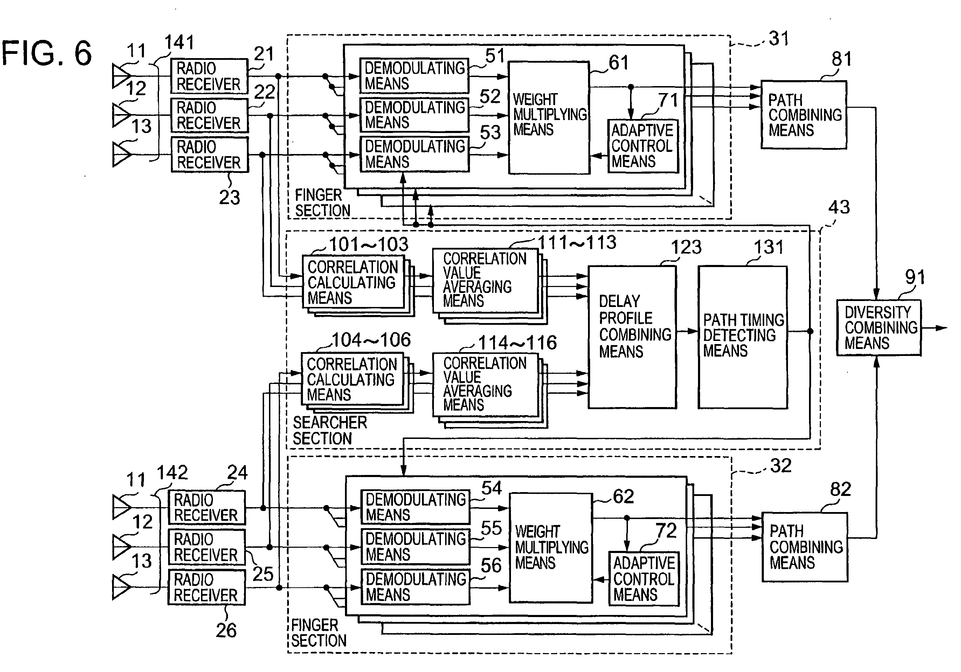

Fig. 6 shows an example of the arrangement of a receiver indicative of the second embodiment of the present invention. The same reference numerals in Fig. 6 denote the same parts as those in Fig. 5.

In Fig. 6, a delay profile combining means 123 does not output a result for each diversity branch and collectively combines the delay profiles for all the antenna elements in both the branches to output the combination result to a path timing detecting means 131. The path timing detecting means 131 detects a plurality of peaks from the combined delay profile and notifies finger sections 31 and 32 in the branches of synchronization chip timings for the respective detected peaks. The remaining arrangement is the same as that in Fig. 5, and a description thereof will be omitted. Note that reference numeral 43 denotes a searcher section in Fig. 6.

According to the second embodiment, synchronization chip timings can be detected more precisely than the first embodiment shown in Fig. 5. If peak detection precision only needs to be the same level as that of a conventional scheme, the second embodiment can detect synchronization chip timings at higher speed than the first embodiment.

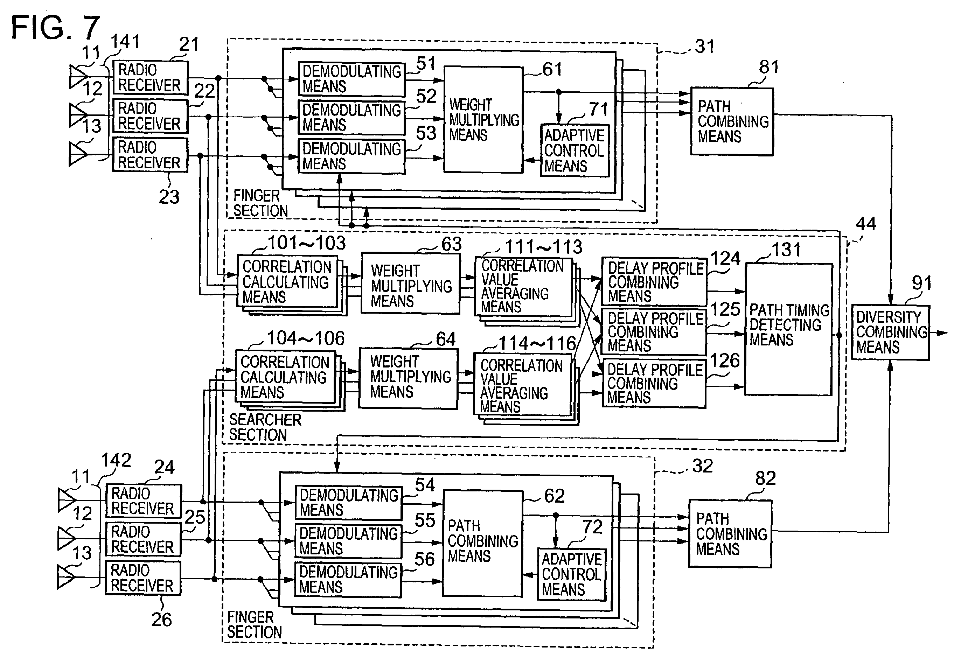

The present invention is also effective in forming beams by a searcher section. For an example, Fig. 7 shows, as the third embodiment, the arrangement of a receiving apparatus which forms a multibeam of three beams for each diversity branch by a searcher section.

A multibeam can suppress interference waves from a direction different from that of a desired wave by dividing a cover area for a plurality of beams using fixed weights. The details of this multibeam are disclosed in Japanese Unexamined Patent Publication No. 2001-345747, and a description thereof will be omitted.

In Fig. 7, the same reference numerals denote the same parts as those in Figs. 5 and 6. Referring to Fig. 7, weight multiplying means 63 and 64 are added to a searcher section 44. Correlation calculating means 101 to 103 and 104 to 106 calculate correlation values for respective antenna elements. Weight multiplying means 63 and 64 of the respective array antenna units multiply the correlation values by predetermined fixed amplitude weights and phase weights. The correlation values for the antenna elements are converted into correlation values for beams.

Correlation value averaging means 111 to 113 and 114 to 116 average the correlation values for the beams so as to output delay profiles for the respective beams. Delay profile combining means 124 to 126 combine beams facing in a single direction across the diversity branches at a single chip timing and generate respective combined delay profiles for three beams. A path timing detecting means 132 detects a plurality of peaks from the combined delay profile for the three beams and notifies finger sections 31 and 32 in both the diversity branches of synchronization chip timings for the beams detected.

According to the third embodiment, when a searcher section is to form beams, synchronization chip timings can be detected at high precision and high speed. Note that the number of multibeams is not limited to a specific one.

## Claims

1. A path search apparatus which receives a signal of a CDMA scheme by an array antenna unit including a plurality of antenna elements and detects a multipath timing, **characterized by** comprising:
a plurality of array antenna units;
delay profile combining means for combining delay profiles for respective antenna elements in said plurality of array antenna units; and
path timing detecting means for detecting path timings of respective outputs from said delay profile combining means.

2. A path search apparatus according to claim 1, **characterized in that** said delay profile combining means is provided for each of said plurality of array antenna units to combine the delay profiles for the antenna elements in said array antenna unit.

3. A path search apparatus according to claim 1, **characterized in that** said delay profile combining means collectively combines the delay profiles for the respective antenna elements in said plurality of array antenna units.

4. A path search apparatus according to claim 1, **characterized by** further comprising beam forming means for forming a beam using as an input a signal received by each antenna element in each of said plurality of array antenna units, wherein said delay profile combining means combines delay profiles for respective beams facing in a single direction across said plurality of array antenna units.

5. A path search apparatus according to claim 4, **characterized in that** said beam forming means has multiplying means for multiplying an output from each antenna element by a predetermined multiplication value.

6. A path search method of receiving a signal of a CDMA scheme by a plurality of array antenna units each including a plurality of antenna elements and detecting a multipath timing, **characterized by** including:
the delay profile combining step of combining delay profiles for respective antenna elements in the plurality of array antenna units; and
the path timing detecting step of detecting path timings of respective outputs in the delay profile combining step.

7. A path search method according to claim 6, **characterized in that** in the delay profile combining step, a delay profile for each antenna element is combined for each of the plurality of array antenna units.

8. A path search method according to claim 6, **characterized in that** in the delay profile combining step, the delay profiles for the respective antenna elements in the plurality of array antenna units are collectively combined.

9. A path search method according to claim 6, **characterized by** further comprising the beam forming step of forming a beam using as an input a signal received by each antenna element in each of the plurality of array antenna units, wherein in the delay profile combining step, delay profiles are combined for respective beams facing in a single direction across the plurality of array antenna units.

10. A path search method according to claim 9, **characterized in that** the beam forming step comprises a multiplying step of multiplying an output from each antenna element by a predetermined multiplication value.

11. An array antenna receiving apparatus **characterized by** comprising a path search apparatus defined in any one of claims 1 to 5, and demodulating means, provided for each of the plurality of array antenna units, for demodulating a signal received by each antenna element in the array antenna unit on the basis of a path timing detected by the path search apparatus.

12. An array antenna receiving apparatus according to claim 11, **characterized by** further comprising weighting means, provided for each of said plurality of antenna units, for weighting demodulation outputs from the respective antenna elements by adaptive control, and combining means for RAKE-combining outputs from said weighting means.
